# EUROPÄISCHE PATENTSCHRIFT

(11) **EP 4 083 727 B1**
(45) Veröffentlichungstag und Bekanntmachung des Hinweises auf die Patenterteilung: **04.06.2025**
(21) Anmeldenummer: 22169994.5
(22) Anmeldetag: 26.04.2022
(51) Int. Cl.: G05B 19/401, B25J 9/16

(54) **VERFAHREN ZUR AUTOMATISIERTEN BEARBEITUNG VON WERKSTÜCKOBERFLÄCHEN DURCH POLIEREN, SCHLEIFEN ODER LACKIEREN**
METHOD FOR AUTOMATED MACHINING OF WORKPIECE SURFACES BY MEANS OF POLISHING, GRINDING OR PAINTING
PROCÉDÉ DE TRAITEMENT AUTOMATISÉ DES SURFACES DE PIÉCE PAR POLISSAGE, MEULAGE OU LAQUAGE

(30) Priorität: 28.04.2021 DE 102021204215
(43) Veröffentlichungstag der Anmeldung: 02.11.2022
(73) Patentinhaber: Fraunhofer-Gesellschaft zur Förderung der angewandten Forschung e.V., 80686 München (DE)
(72) Erfinder: Richter-Trummer, Valentin, 09126 Chemnitz (DE); Ahrens, Antje, 09216 Chemnitz (DE)
(74) Vertreter: Pfenning, Meinig & Partner mbB

(56) Entgegenhaltungen:
- WO-A1-2020/128905
- DE-A1- 102015 219 257
- DE-A1- 102015 225 667
- DE-A1- 102019 200 482
- DE-A1- 4 308 246

## Beschreibung

Die Erfindung betrifft ein Verfahren zur automatisierten Bearbeitung von Werkstückoberflächen z.B. durch Polieren, Schleifen oder Lackieren. Dabei kann das Verfahren vollautomatisiert zumindest aber teilautomatisiert durchgeführt werden. Die Erfindung kann insbesondere bei der Bearbeitung von kleinen Werkstückstückzahlen eingesetzt werden. Bearbeitungsparameter können auch bei wechselnden Oberflächenarten, insbesondere bei der Bearbeitung unterschiedlicher Muster von Oberflächen, wie z.B. Holzmaserung, individuell angepasst werden.

Beim Lackieren oder Schleifen von Holz müssen Bahn, Kraft und weitere Parameter üblicherweise von Hand so lange angepasst werden bis das gewünschte Ergebnis erzielt wurde. Das ist insbesondere bei Naturwerkstoffen von Bedeutung, da die Bearbeitungsparameter auch innerhalb eines Werkstückes verändert werden müssen, um das gewünschte Gesamtergebnis zu erzielen. In vielen Fällen ist die Notwendigkeit einer Bearbeitungsparameteranpassung aber erst im Prozess - Aufgrund der Reaktion des Werkstückes auf die Bearbeitung - erkennbar. Dabei ist die Definition des gewünschten Ergebnisses für sich jedoch bereits eine große Herausforderung, da sie sich vorrangig am Erfahrungswissen orientiert. Auch ist das Ergebnis meist nicht objektiv an einem bestimmten Wert festzulegen, sondern orientiert sich vielmehr am erfahrungsbasierten Gesamteindruck. Hierfür werden unterschiedliche sensorische Fähigkeiten des Menschen genutzt, um anschließend erfahrungsbasiert eine Bewertung vorzunehmen, die danach meist in Handbewegungen umgesetzt wird.

Ein ähnlicher Ansatz wird jetzt für die roboterbasierte Automatisierung von sensiblen Bauteilen auch bei geringsten Stückzahlen gesucht. (bei höheren Stückzahlen macht der Prozess dann Sinn, wenn es sich um Naturwerkstoffe wie Holz handelt, da dort das Werkstück makroskopisch - sozusagen geometrisch - zwar gleich ist (=Serienfertigung), im Detail - zum Beispiel Faserrichtung - aber unterschiedlich (=Einzelstückfertigung)).

Bislang werden sensible Bauteile in geringen Stückzahlen (insbesondere Stückzahl 1) händisch gefertigt oder zumindest von menschlichen Mitarbeitern aktiv überwacht. Zum Beispiel hat ein Maschinenbediener klassischerweise, gerade bei neuen oder noch unbekannten Bauteilen, die Möglichkeit mittels eines prominenten Drehknopfes die Fräsgeschwindigkeit so anzupassen, dass kein Rattern zu hören ist.

Bisherige Lösungen in Richtung intelligenter Werkzeugspindeln konzentrieren sich auf die Reduzierung von Vibrationen und somit auch Rattermarken durch eine angepasste Drehzahlsteuerung bei Fräsprozessen. Das Werkstück wird hier nur indirekt überwacht und es können gerade bei sensiblen Materialien und geringen Stückzahlen keine finalen Rückschlüsse auf die tatsächlichen Prozessergebnisse gezogen werden.

Beim Entgraten größerer Stückzahlen aus Metall oder Kunststoff kann auch eine intelligente Auswertung integrierter Sensoren helfen. Zum Beispiel können durch integrierte Auslenkungs- und Geschwindigkeitssensoren neben wartungsrelevanten Parametern auch Rückschlüsse auf Schwankungen in der Bauteilbeschaffenheit (insbesondere der Größe) bei einer Serienfertigung gezogen werden. Solche Schwankungen kommen in Naturwerkstoffen wie Holz ständig vor. Auch hier erfolgt lediglich eine indirekte Bauteilüberwachung.

Auch kraftgeregelte Endeffektoren, die zum Beispiel die Schwerkraft bei Schleifarbeiten mit einbeziehen, wurden bereits entwickelt um auf intelligente Weise die Genauigkeit zu steigern. Es wird dabei jedoch in Bezug auf das Werkstück lediglich in einem offenen Kreis geregelt.

Hauptsächlich gibt es jedoch aus dem Bereich der vorausschauenden Wartung Lösungen, die auf das Aufzeichnen großer Datenmengen und maschinelles Lernen setzen. Hier geht es jedoch in erster Linie um eine Erhöhung der Lebensdauer und eine Verringerung der Anschlusskomplexität durch die Datengenerierung direkt in einer Spindel.

Für größere Stückzahlen können Bearbeitungsparameter mittlerweile auch, zum Beispiel auf Basis nachgelagerter Qualitätsbeurteilungen automatisiert optimiert werden. Dieses Verfahren ist jedoch für geringe Stückzahlen oder gar eine Stückzahl 1 nicht effektiv.

Auch zur Optimierung der Planung der Vorschubbewegung bei einer Bearbeitung kann künstliche Intelligenz eingesetzt werden, was jedoch aktuell aufgrund der fehlenden sensorischen Erfassung des Bauteils in Echtzeit noch nicht für geringe Stückzahlen funktioniert.

So sind aus DE 43 08 246 A1 ein Verfahren und eine Vorrichtung zur Steigerung der Wirtschaftlichkeit von Bearbeitungsmaschinen bekannt.

WO 2020/128905 A1 betrifft ein automatisiert betreibbares Oberflächenbearbeitungssystem.

In DE 10 2019 200 482 A1 sind ein Verfahren und eine Vorrichtung zur automatisierten Bearbeitung eines Werkstücks mit einer Werkzeugmaschine beschrieben.

Es ist Aufgabe der Erfindung, Möglichkeiten für eine automatisierte Oberflächenbearbeitung bei kleinen Werkstückzahlen und/oder wechselnden Oberflächen anzugeben, deren Bearbeitungsergebnisse zumindest denen einer manuellen Bearbeitung nahe kommen oder diese sogar übertreffen.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Ein Bestandteil der Erfindung ist ein Endeffektor, z.B. für Polier-, Schleif- und Lackieraufgaben, insbesondere von Holz, der mehrere Disziplinen vereint - Sensorik, Aktorik, Daten- und Messsignalverarbeitung -, um ein im Vergleich zu den jeweiligen Nachbarregionen gleichmäßiges Bearbeitungsbild an der zu bearbeitenden Oberfläche zu erreichen.

Bei dem erfindungsgemäßen Verfahren wird ein Endeffektor mit mindestens einem Werkzeug, das zur jeweiligen Oberflächenbearbeitung ausgebildet ist, relativ in Bezug zu einer jeweiligen zu bearbeitenden Oberfläche bewegt. Dabei werden vor, bei der Durchführung der Bearbeitung und nach einer Bearbeitung in einem Bearbeitungsbereich vor, neben und in Vorschubbewegungsrichtung nach einem bearbeiteten Oberflächenbereich der jeweiligen Bearbeitung mit mindestens einem Sensor, ortsaufgelöst, bevorzugt orts- und zeitaufgelöst Messsignale, die das momentan erreichte Bearbeitungsergebnis repräsentieren erfasst und einer elektronischen Auswerte- und Steuereinheit, die am jeweiligen Endeffektor vorhanden ist, zugeführt.

Mit der elektronischen Auswerte- und Steuereinheit wird ein Soll-Ist-Wertvergleich durchgeführt, ob ein vorgegebenes Arbeitsergebnis erreicht worden ist oder nicht, wobei mit dem Ergebnis des Soll-Ist-Wertvergleichs die Bearbeitung der jeweiligen Oberfläche beendet oder Parameter mit denen das jeweilige Werkzeug betrieben wird, entsprechend angepasst werden und die jeweilige Oberflächenbearbeitung im jeweiligen Oberflächenbereich mit geänderten Parametern wiederholt oder bei einer weiteren Vorschubbewegung diese Parameter angepasst werden.

Insbesondere beim Polieren oder Schleifen ist es vorteilhaft eine Messsignalerfassung in einem Oberflächenbereich, der um den Oberflächenbereich, der momentan bearbeitet wird, angeordnet ist, durchzuführen. Dieser Oberflächenbereich kann in seiner geometrischen Form dem momentan bearbeiteten Oberflächenbereich entsprechen und beispielsweise kreisringförmig oder rechteckig sein.

Beim Lackieren ist es vorteilhaft allein oder zusätzlich Messsignale unmittelbar im Bearbeitungsbereich zu erfassen, so dass erkannt werden kann, ob und wie ein Lackauftrag auf der Oberfläche momentan erfolgt. Oberflächenbereiche, die außerhalb davon angeordnet sind, sollten ebenfalls zusätzlich überwacht werden, um insbesondere die Sättigung des Untergrunds der Oberfläche mit dem jeweiligen Lack berücksichtigen zu können.

Es können Sensoren eingesetzt werden, die ausgewählt sind aus einem Kraft-, Drehmomentsensor, einem Sensor zur Bestimmung der momentanen Antriebsleistung eines Werkzeugs, ein Sensor zur Bestimmung der Drehgeschwindigkeit einer Werkzeugspindel, ein Oberflächenrauheitssensor, ein optischer Sensor, bevorzugt ein bildgebendes optisches Sensorsystem, Durchflussmengensensor, ein Temperatursensor, ein Abstandssensor, Ein Glanzgradsensor und Farbsensor. Bevorzugt sollten mindestens zwei unterschiedliche Sensoren eingesetzt werden.

Je nach erfassten Messsignalen kann dann eine Kraft, die Drehgeschwindigkeit, die Vorschubbewegungsgeschwindigkeit des Endeffektors, der Abstand zur zu bearbeitenden Oberfläche, der Volumenstrom von Lack und/oder eines Luftstroms mit dem ein Schleier um den momentan lackierten Bearbeitungsbereich zum Schutz von Sensoren und zur Trocknung des Lacks ausgebildet werden soll, geregelt werden.. Eine Regelung kann nicht unbedingt im Interpolationstakt eines Roboters erfolgen. Si e kann auch langsamer erfolgen und so erst über mehrere Interpolationstakte wirksam werden. Dies kann sinnvoll sein, um keine sprunghaften Bearbeitungsparameteränderungen zu initiieren und zum Beispiel auch der Sensorik bei Lackierprozessen mehr Zeit zu geben den aufgetragenen und langsam aushärtenden Lack zu beobachten.

Die mit dem/den jeweiligen Sensor(en) detektierten Messsignale sollten ortsaufgelöst erfasst werden, wobei die erfassten Messsignale jeweiligen Positionskoordinaten zugeordnet und bei der Auswertung und Steuerung berücksichtigt werden. Dabei kann es ausreichend sein die Positionskoordinaten zweidimensional zu berücksichtigen. Bei gewölbten zu bearbeitenden Oberflächen kann auch eine dreidimensionale Erfassung und Berücksichtigung sinnvoll sein.

Insbesondere bei Oberflächen, die eine Musterung, wie z.B. eine Maserung aufweisen kann allein oder zusätzlich auch eine wellenlängenaufgelöste Erfassung mit einem optischen Sensor durchgeführt werden. Dabei kann eine spektrale Auswertung von reflektierter und/oder gestreuter elektromagnetischer Strahlung durchgeführt werden. Es kann auch eine Bildverarbeitung zur Erfassung und Auswertung solcher Oberflächen genutzt werden.

Erfasste Messsignale, die vorgegebene Oberflächen- und Bearbeitungsarten repräsentieren können vorteilhaft in Gruppen zusammengefasst und einem elektronischen Speicher zugeführt werden. Mit den Gruppen kann der Soll-Ist-Wertvergleich durchgeführt werden, der dann wieder für die Steuerung des Endeffektors genutzt werden kann.

Es besteht auch die Möglichkeit den Soll-Ist-Wertvergleich mit Daten, die anhand von Bearbeitungsexperten ermittelt worden sind und die bevorzugt ebenfalls in Gruppen zusammengefasst werden, durchzuführen. Dabei kann zuerst an einer analogen Oberfläche eine manuelle Bearbeitung mit Steuerung eines Endeffektors durchgeführt werden und dabei entsprechende Messsignale den jeweiligen Bearbeitungspositionen und Betriebsparametern des jeweiligen Endeffektors zugeordnet und gespeichert werden.

Man kann aber auch eine Bewertung eines Experten eines Bearbeitungsergebnisses heranziehen, um den jeweiligen Bearbeitungszustand einzuschätzen, der mit bekannten Betriebsparametern des Endeffektors erreicht worden ist. Auch dafür kann man mindestens einen Datensatz erstellen und für einen Soll-Ist-Wertvergleich heranziehen. Dabei können mehrere Datensätze mindestens einer Gruppe zugeordnet werden.

Mit dem mindestens einen Sensor erfasste Messsignale können einem Einlernprozess zugeführt werden, mit denen eine Wissensbasis erstellt wird, die für nachfolgende Soll-Ist-Wertvergleiche und die Steuerung des jeweiligen Endeffektors genutzt werden kann. Dazu kann man ebenfalls manuell erhaltene Messsignale und zugeordnete Steuerparameter des Endeffektors sowie ggf. auch bei einer automatisierten Bearbeitung erhaltene Messsignale mit zugeordneten Steuerparametern nutzen, um ein selbstlernendes System zu erhalten bzw. ein System sukzessive zu verbessern.

Ein Endeffektor kann fest im Raum oder einem Manipulator positioniert werden und ein Roboter als ein Beispiel eines Manipulators kann ein jeweiliges Werkstück bewegen, wobei der Roboter auch jeweils die Positionskoordinaten der jeweils bearbeiteten Oberflächenposition an die elektronische Auswerte- und Steuereinheit übermitteln, oder aber zumindest eine Kommunikation zwischen Endeffektor und elektronischer Auswerte- und Steuereinheit erfolgen kann, die eine Entscheidung trifft, ob die Bearbeitung an einer bestimmten Position auf der Werkstückoberfläche abgeschlossen wird oder eine weitere Bearbeitung in dem entsprechenden Oberflächenbereich erforderlich ist.

Durch voneinander verschiedenartige Datenstrukturierung und Analysen können hintergründige Zusammenhänge der Bearbeitungskonfigurationen und - ergebnisse erfasst und diese funktional umgesetzt werden, so dass für unbekannte Sensormesssignalkonstellationen Bearbeitungsparameter extrapoliert werden können.

Dabei kann so vorgegangen werden, dass ein neuer Datensatz mit insbesondere vor Beginn einer Bearbeitung oder vor Beginn einer weiterführenden Bearbeitung an einer Position oder in einem bestimmten Oberflächenbereich ortsaufgelöst erfassten Messsignalen, die den zu diesem Zeitpunkt vorgegebenen oder bis dahin erreichten Bearbeitungszustand bzw. ein nach einer Bearbeitung erreichtes Endergebnis (z.B. nach der Trocknung beim Lackieren) repräsentieren, aufgenommen und die so ermittelten Ergebnisse einer Bewertung, z.B. einer Expertenbewertung unterzogen werden. Dabei kann festgestellt werden, dass das erreichte Bearbeitungsergebnis an dieser Position oder in diesem Oberflächenbereich ein gewünschtes Ergebnis erreicht hat oder nicht. Ist das Bearbeitungsergebnis erreicht worden, kann die Bearbeitung an dieser Position oder in diesem Oberflächenbereich beendet werden.

Fällt die Bewertung negativ aus, wird die Bearbeitung ggf. mit veränderten bevorzugt an das erreichte Bearbeitungsergebnis angepassten Bearbeitungsparametern weiter durchgeführt. Dazu können über mathematische Prozesse und Mittel, z.B. neuronale Netze auch bereits vorhandene vorab ermittelte Datensätze einer Datenbasis, die im Lauf der Zeit mit immer neu erfassten Datensätzen ständig erweitert werden kann, berücksichtigt werden. Dazu können Bearbeitungsparameter unter Berücksichtigung von nach weiteren oder vorab durchgeführten ähnlichen Bearbeitungsschritten erfassten Messsignalen, die erreichte Bearbeitungsergebnisse repräsentieren, berücksichtigt werden. Als Messwerte können, z.B. eine erreichte Oberflächenhaptik, eine zwei- oder dreidimensionale Oberflächenstruktur, ein optische Gesamtbild (z.B. eine Musterung eines Holzes) und/oder ein Glanz, berücksichtigt werden.

Insbesondere können Datensätze Berücksichtigung finden, die an ähnlichen aber anders geometrisch gestalteten Oberflächen erfasst und in einer Datenbasis gespeichert worden sind.

Mit Datensätzen kann man beispielsweise durch Klassifizieren Cluster (Gruppen) bilden, mit denen eine Datenreduzierung und/oder eine Identifikation von Gemeinsamkeiten, beispielsweise bei der Gewinnung von Bearbeitungsergebnissen unter Berücksichtigung von dabei eingehaltenen Bearbeitungsparametern, erreicht wird. Also Erfahrungen nutzen, die man in der Vergangenheit bei gleichen oder ähnlichen Bearbeitungsvorgängen mit entsprechend dazu eingehaltenen Sensorwerten und finalen Bearbeitungsergebnissen gewonnen hat.

Die Sensoren können dabei nicht nur den Endeffektor (z.B. Durchflussmengen, Geschwindigkeiten, Kräfte, Vibrationen) berücksichtigen, wie es im Stand der Technik schon teilweise möglich ist, sondern auch das Werkstück selbst. Dabei kann der kombinierte Einsatz unterschiedlicher Sensoren in Betracht gezogen werden. Z.B. können neben optischen Sensoren auch taktile für Oberflächenanalysen geeignete Sensoren eingesetzt werden, die beispielsweise die Oberflächeneigenschaften bereits mindestens einmal bearbeiteter Oberflächenbereiche bewerten, um Rückschlüsse auf ein bereits erreichtes oder ein noch zu erreichendes Bearbeitungsergebnis schließen zu können. So kann man durch Sensordatenfusion aussagekräftige Daten erhalten. Der Regelkreis um das Werkstück kann dadurch erweitert werden, so dass durch eine integrierte Datenverarbeitung die Aktorik des jeweiligen Endeffektors direkt auf das momentane Bearbeitungsergebnis am Werkstück zur Beeinflussung der weiteren Bearbeitung reagieren kann. Dies kann einmal eine Wiederholung der Bearbeitung eines bereits bearbeiteten Oberflächenbereichs, wie auch eine nachfolgende Bearbeitung von Oberflächenbereichen, die infolge einer Vorschubbewegung mit dem Endeffektor bearbeitet werden können.

Wichtig ist eine explizite Erfassung von Messsignalen in der nächsten Umgebung einer zu bearbeitenden Position an der Werkstückoberfläche und der Reaktion auf diese Gegebenheiten durch entsprechende Anpassung der Betriebsparameter des Werkzeugs bzw. Endeffektors. Eine erweiterte Erfassung von Messsignalen kann zum Beispiel auch zeitlich versetzt stattfinden. Dies kann zum Beispiel während eines vorhergehenden Bearbeitungsschrittes, beispielsweise einem Polieren, das nach einem Schleifen oder einem mehrfachen Schleifen oder Polieren erfolgen.

Beim Schleifen von Holz kann so eine behutsame Annäherung an die gewünschte finale Geometrie und/oder Oberflächenrauheit erreicht werden. Dabei kann die zum Schleifen benötigte Kraft, mit der das Werkzeug an der zu bearbeitenden Oberfläche wirkt, erst nach und nach auf Basis der Reaktion des Werkstückes auf die Aktion des Endeffektors erhöht werden.

Beim Lackieren von Holz kann beispielsweise die Saugfähigkeit des Holzes beachtet und weitere Lackschichten nur dann aufgetragen werden, wenn das in bestimmten Oberflächenbereichen auch nötig ist.

Diese Vorgehensweise erlaubt es die menschliche Arbeitsweise auf vergleichsweise einfache Art nachzuahmen. Ein erfahrener Bearbeiter würde auch lokal fühlen, das Bauteil jedoch auch immer wieder als Ganzes erfassen und so einen Eindruck über das Gesamtbild erhalten. Um ein gleichmäßiges Erscheinungsbild zu erreichen, können die Messsignale, die in Oberflächenbereichen, die benachbart zu einem momentan bearbeiteten Oberflächenbereich angeordnet sind, beispielsweise vor, neben oder in einem Umkreis um einen direkt im Moment bearbeiteten Oberflächenbereich eines Werkstücks erfasst worden sind, in die Berechnung der nachfolgend anzuwendenden Bearbeitungsparameter für das jeweilige Oberflächenbearbeitungswerkzeug mit aufgenommen werden. Hierfür können je nach Anwendung und Bearbeitung unterschiedliche Algorithmen in Betracht kommen. Dies kann ausgehend von der relativ einfachen "nearest-neighbor-interpolation", bis hin zu komplexen Lösungen, um auch Muster automatisiert fortsetzen zu können, der Fall sein. Primär kann aber eine einfache Interpolation der benachbart zur momentanen Bearbeitungsoberfläche erfassten Messsignale dafür sorgen, dass ein gleichmäßiges Aussehen der jeweiligen bearbeiteten Oberfläche erreicht werden kann. Eine solche einfache Version kann dadurch realisiert werden, dass in einer Matrix in einem lokalen Speicher jeweils die Messsignale und dazugehörige Bearbeitungspositionen aufgezeichnet werden.

Bei der Erfindung sollte aus zwei Gründen auf lokale Sensorik anstatt einer weiter entfernten Kamera gesetzt werden So kann einmal der Bearbeitungszellenaufbau mit Sensorik deutlich vereinfacht werden, da der Endnutzer nur einen neuen Endeffektor an einen Roboter oder eine Bearbeitungsmaschine hängen muss, und sich ansonsten um nichts kümmern muss. Zum anderen ist insbesondere für optische Sensoren die Beleuchtung von Bedeutung. Eine kontrollierte Umgebung lässt sich lokal viel einfacher garantieren, als aus der Entfernung, wo beispielsweise viel mehr Streulichtquellen usw. vorhanden sein können. Die Erfindung unterscheidet sich absichtlich von der Vorgehensweise erfahrener Mitarbeiter, die bei der Bearbeitung besonders komplexer Objekte auch schon einmal einen Schritt zurück geht, um das Ergebnis aus der Entfernung zu betrachten.

Die jeweilige Bearbeitungsposition kann hier einerseits von einer Roboter- oder Maschinensteuerung bereitgestellt werden. Sie kann aber bevorzugt auch aus den Messsignalen integrierter Beschleunigungssensoren und Gyroskope errechnet werden, die es erlauben auf einfache und vor allem unabhängige Weise die jeweilige Relativposition des Werkzeuges im Vergleich zu den vorhergehenden Messpositionen zu bestimmen

Die integrierte Logik kann einerseits die direkt von der Werkzeugspindel verwalteten Bearbeitungsparameter ansteuern. Dies kann z.B. Durchflussmengen, Drehgeschwindigkeiten oder auch integrierte Aktoren zur Kraftsteuerung betreffen. Es können aber auch Informationen an die jeweilige Roboter- oder Maschinensteuerung übermittelt werden, um die jeweilige Vorschubbewegungsrichtung des Werkzeugs anzupassen oder bereits bearbeitete Oberflächenbereiche erneut abzufahren, um ein gewünschtes Bearbeitungsergebnis erreichen zu können. Für den Endanwender sollte das Ganze aber mit geringstem Programmieraufwand realisierbar sein. In den meisten Fällen sollte dies ohne zusätzliche Programmierung, außer der initialen Bahnplanung der Vorschubbewegung, die aber auch auf Basis eines CAD-Modells oder eines Bauteilscans automatisiert erstellt werden kann, erreicht werden. Die technische Auslegung der nötigen Steuerung kann aus dem Stand der Technik übernommen werden.

Geringe technische Integrationshürden können durch Nutzung möglichst standardisierter Anschlüsse erreicht werden (z.B. ein Leistungsanschluss und ein ProfiNet Datenanschluss). Die Integrationskosten in eine bestehende Bearbeitungszelle können dadurch geringgehalten werden, so dass an der Bearbeitungszelle keine signifikanten Veränderungen vorgenommen werden müssen.

Ein Endeffektor kann entweder am Roboter, an einer Werkzeugmaschine oder fest im Raum angeordnet sein. Bei einer festen Installation im Raum würde dann zum Beispiel ein Roboter die Bauteilhandhabung vor dem Endeffektor übernehmen (und die jeweilige Position am Werkstück datentechnisch an die Logikeinheit übermitteln), ansonsten wäre die Funktionsweise identisch, wie bei den anderen zwei Anordnungsmöglichkeiten.

Vier Varianten sind mit jeweils erhöhtem Schwierigkeitsgrad denkbar:
1.) Aktive Werkzeugspindel (einfach in nahezu alle Robotersysteme oder Bearbeitungsmaschinen bzw. -zentren integrierbar):
   Die Werkzeugspindel arbeitet nahezu entkoppelt von der Roboter- bzw. Anlagensteuerung. Lediglich der "ein/aus" Befehl sollte von der Anlagensteuerung kommen, die jeweilige Drehzahl und/oder Kraft kann innerhalb der Werkzeugspindel gesteuert werden. Eine solche Werkzeugspindel wäre zum Beispiel beim Schleifen von Holz oder auch für das Polieren bzw. Entgraten anwendbar. Für solche Anwendungen sollte eine programmierte Roboterbahn die gesamte zu bearbeitende Werkstückoberfläche mit entsprechender Vorschubbewegung mindestens einmal abfahren, um jede Position an der jeweiligen Werkstückoberfläche bearbeiten zu können. Dabei reagiert das Naturprodukt Holz nicht gleichmäßig auf das Werkzeug über eine zu bearbeitende Oberfläche. In der einfacheren Variante kann die aktive Werkzeugspindel die komplette Drehzahlsteuerung übernehmen, während in der komplexeren Variante auch eine integrierte Kraftsteuerung ermöglicht werden kann, indem die Werkzeugspindel eine Zusatzachse und Kraftsensoren aufweist. Während die zu bearbeitende Oberfläche des Werkstücks mit der Werkzeugspindel und dem jeweiligen Werkzeug abgefahren wird, kann die integrierte Sensorik (z.B. ein Kamerasystem) den lokalen Zustand vor und/oder nach der Bearbeitung eines Oberflächenbereichs eines Werkstücks erfassen. Auf Basis von zum Beispiel eingelerntem Erfahrungswissen, vorgegebenen Bearbeitungsrichtlinien und im Verlauf der Nutzung vorab gesammelter Daten kann eine aktive Werkzeugspindel selbstständig entscheiden, mit welcher Drehzahl und Kraft das Werkstück im jeweiligen Bereich bearbeitet werden soll.
2.) Aktive Lackiereinheit (einfach in nahezu alle Robotersysteme integrierbar):
   Diese Anwendung ist der unter 1.) erläuterten sehr ähnlich, mit dem Unterschied, dass der Endeffektor aktiv die jeweils aufzutragende Lackmenge und weitere Parameter einer Sprüheinheit zur Beeinflussung des auf die jeweiligen Oberflächenbereich aufzubringenden Volumenstroms an Lack und die Verteilung der einzelnen Lacktröpfchen steuern kann. Die Roboterbahn entlang derer der entsprechend ausgebildete Endeffektor bewegt werden soll, sollte auch zumindest einmal die gesamte zu bearbeitende Oberfläche des Werkstücks abfahren. Die Sprüheinheit kann die Lackierparameter lokal und autonom auf Basis von Messsignalen und Erfahrungswissen (oder anderen vorgegebenen Werten) steuern. So kann zum Beispiel eine gleichmäßige Grundierung von Holz mit lokal variierenden Saugeigenschaften erreicht werden.
3.) Einbeziehung der Robotersteuerung ohne Bahnänderung (benötigt Integration in die Robotersteuerung)
   Bei dieser Variante kann die Werkzeugspindel zusätzlich zu den oben beschriebenen Fähigkeiten auch vorprogrammierte Elemente aus dem Robotersteuerprogramm ausführen. Das heißt, zum Beispiel kann die im Roboterprogramm als Parameter hinterlegte Vorschubbewegungsgeschwindigkeit des jeweiligen Werkzeugs an die Bedürfnisse des Werkstückes angepasst werden, oder es können auch bereits im Roboterprogramm vorgesehene Aktionen, wie beispielsweise ein mehrfaches oder ausgewähltes Abfahren von Bahnen ausgeführt werden. Hierfür kann die Werkzeugspindel roboterseitig die entsprechenden Signale zur Bewegung des Roboters mit dem Endeffektor in Bezug zur zu bearbeitenden Oberfläche oder die zu bearbeitende Oberfläche in Bezug zum Endeffektor ansteuern.
4.) Einbeziehung der Robotersteuerung inklusive Bahngenerierung (benötigt sehr tiefe Integration in die Robotersteuerung)
   In der komplexesten Ausführung definiert die Werkzeugspindel eines Werkzeugs eigenständig und in nahezu Echtzeit die Roboteraktionen. Zum Beispiel könnte in dieser Ausführung spindelseitig eine komplett neue, an die Bedürfnisse des Werkstücks angepasste Roboterbahn vorgeschlagen und abgefahren werden. Hier wäre ein sehr tiefer Eingriff in die Roboter- oder Maschinensteuerung notwendig.

Nachfolgend sollen Erklärungen für eine Beeinflussung eines Endeffektors beim Schleifen bzw. Polieren abgegeben werden.
- Bei einem kraftgeregelten Schleifprozess in senkrechter Richtung zur Oberfläche (am Beispiel einer einfach drehenden Spindel) können die Querkräfte und das Drehmoment, die mit entsprechend ausgebildeten Sensoren bestimmt werden können, genutzt werden, um direkt unter dem Werkzeug den jeweiligen Bearbeitungszustand zu bestimmen. Dabei kann ausgenutzt werden, dass eine raue Oberfläche größere Tangentialkräfte am Schleifwerkzeug bewirkt, als eine glatte Oberfläche. Zusätzlich kann die Rauheit um das eigentliche Werkzeug herum direkt an der Oberfläche mit mindestens einem entsprechend ausgebildeten Sensor taktil erfasst werden. Optische Sensoren können auch dazu eingesetzt werden. Die Sensordaten können gemeinsam in einem elektronischen Speicher, bevorzugt in vorgegebenen Gruppen sortiert, abgelegt und mit den Entscheidungen erfahrener Mitarbeiter (Expertenwissen) verglichen werden, die für die Entscheidung ihre üblichen Instrumente bzw. Messgeräte nutzen können (zumeist lediglich Hände zum Fühlen und Augen). Aus diesem Vergleich kann eine Entscheidung abgeleitet werden, die auf einer Vielzahl von Informationen beruht.
- Als Sensor außerhalb der Spindel kann zum Beispiel ein einfacher Scherkraftsensor, wie er aus https://connect.nissha.com/filmdevice/en/shear-force-sensor/ bekannt ist, eingesetzt werden, der ringförmig um das eigentliche Schleifwerkzeug angebracht ist und sich um die Spindelachse drehen kann, um ständig Informationen vor, hinter und neben dem Werkzeug im Bereich um den momentan bearbeiteten Oberflächenbereich zu sammeln. Alternativ könnte auch die Oberflächenrauheit direkt gemessen werden, wie dies beispielsweise aus https://www.sciencedirect.com/science/article/pii/S09244247163119 92 bekannt ist. So lassen sich effektiv Messsignale vor und nach der Bearbeitung in einem bearbeiteten Oberflächenbereich vergleichen. Es können auch bildgebende Sensoren eingesetzt werden, mit denen das Umfeld des jeweiligen momentan bearbeiteten Oberflächenbereichs überwacht und mit einer geeigneten Software die erfassten Messsignale, beispielweise mit einer Bildverarbeitung ausgewertet und für die Steuerung von Betriebsparametern berücksichtigt werden kann. Bildgebende Sensoren können ringförmig um die eigentliche Bearbeitungsspindel angeordnet sein.
- Für Polieraufgaben kann mindestens ein Sensor zur Glanzmessung vorhanden sein, mit dem von der bearbeiteten Oberfläche reflektierte und/oder gestreute elektromagnetische Strahlung mit optischen Sensoren bevorzugt orts- und/oder wellenlängenaufgelöst detektiert wird und dabei die jeweils erfasste Intensität berücksichtigt werden kann.

### Lackieren

- Im Lackierprozess können Sensoren für Farbe und Glanzgrad eingesetzt werden, die zumindest in ähnlicher Weise, wie vorab bereits erläutert, reflektierte und/oder gestreute elektromagnetische Strahlung im Arbeitsbereich registrieren und zur Auswertung und Steuerung von Betriebsparametern genutzt werden können. Messungen können bevorzugt im nassen Zustand des Lacks durchgeführt werden, wobei die eigentliche Auswertung erst im trockenen Zustand des aufgetragenen Lacks erfolgen sollte. Hier kann darauf gesetzt werden, dass eine Korrelation zwischen mit Sensoren erfassten Messwerten im nassen Zustand mit der erreichten Qualität im trockenen Zustand ermittelt und ausgenutzt werden kann.
- Auch hier sollten die Sensoren direkt am Sprühendeffektor angebracht werden, wobei die Sensoren beispielsweise möglichst durch Sperrluft oder einer Schutzfolie, die vor mindestens einem Sensor angeordnet werden kann, von Lackpartikeln abgeschirmt werden sollten

Sensormesssignale können vor, während und nach der Durchführung einer Bearbeitung eines Oberflächenbereichs erfasst werden (im Folgenden nur als Sensormesssignale bezeichnet). Messsignale können während der Bearbeitung erfasst werden, sofern die Zugänglichkeit der Sensorik das erlaubt - zumeist können direkt unter der Bearbeitungsspindel lediglich Kräfte gemessen werden, im Fall der Lackierung ist die Zugänglichkeit nicht beeinträchtigt, es tritt jedoch verstärkt Sprühnebel auf vor dem ein Luftschleier die Sensoren schützen kann.

Zusätzlich können die jeweiligen Bearbeitungsparameter aufgenommen werden. Die Sensormesssignale können jeweils gemeinsam mit ihren relativen Positionskoordinaten, bevorzugt mindestens zweidimensional erfasst und berücksichtigt werden.

Zielstellung sollte es dabei sein eine Verbindung zwischen Bearbeitungsparametern, Sensormesssignalen und Bearbeitungsergebnis herstellen zu können, so dass zukünftig anhand von Sensormesssignalen die Parameter zur Beeinflussung des jeweiligen Werkzeugs bei der momentan durchgeführten Oberflächenbearbeitung eingestellt werden können. Das Ergebnis kann in einer Einlernphase jeweils von erfahrenen Mitarbeitern beurteilt werden. Sensormesssignale sollten jeweils mit Positions- und Zeitstempel (orts- und zeitaufgelöst), inklusive Informationen zu aktuell genutzten Bearbeitungsparametern (z.B. Drehgeschwindigkeit) gespeichert werden, so dass das jeweilige Werkzeug bzw. eine Endeffektor bei einem nachfolgend durchzuführenden Bearbeitungsgang bei der Entscheidung "schneller drehen" also wissen kann, was schneller in Zahlen bedeutet und so das Bearbeitungsergebnis schneller und besser erreicht werden kann.

Ansätze für die algorithmische Auswertung der Sensordaten:
Daten-Strukturierung & -Analyse: In dieser Phase sollen Datensätze in Abhängigkeit von der konkret vorliegenden dreidimensionalen Geometrie der zu bearbeitenden Oberfläche eines Bauteils in kleinere einzelne Oberflächenbereiche zerlegt werden, die auf andere Werkstücke mit gleicher bzw. ähnlicher Geometrie und Geodäsie übertragen werden können. Dabei geht es unter anderem um besonders auffällige Geometrien (zum Beispiel eine Unterscheidung zwischen Kanten, geraden Flächen, konkaven und konvexen Oberflächenbereichen), die sensortechnisch erfasst werden können, um sie in die weitere Berechnung der Werkzeugsteuergrößen (Bearbeitungsparameter) gesondert mit einzubeziehen. Es kann berücksichtigt werden, dass an Kanten andere Parameter genutzt werden müssen, als an planen Oberflächen, um zum Beispiel nicht ungewollt eine Kante wegzuschleifen.
1. Zur Umsetzung kann eine Klassifikation von Datensätzen von Experten-Bewertungen hinsichtlich der Art der Geometrie, der Ergebnisqualität und/oder Nachbearbeitungsschritte, differenziert nach verschiedenen Parametertypen, Basisstrukturen etablieren.
   Mithilfe von Clustering können Gruppen von Bearbeitungsparametern und Sensormesssignalen anhand der Daten extrahiert werden, wobei die folgenden Ziele maßgeblich sind:
   - Zur Umsetzung kann eine Klassifikation von Datensätzen von Experten-Bewertungen hinsichtlich der Art der Geometrie, der Ergebnisqualität und/oder Nachbearbeitungsschritte, differenziert nach verschiedenen Parametertypen, Basisstrukturen etabliert werden;
   - Mithilfe von Clustering können Gruppen von Bearbeitungsparametern und Sensormesssignalen anhand der Daten extrahiert werden, wobei die folgenden Ziele maßgeblich sind: Identifizieren von ähnlich Datensätzen:
      ∘ Identifizieren von ähnlichen Datensätzen in beiden Bereichen;
      ∘ Identifizieren von Faktoren, die ähnliche Datensätze charakterisieren;
      ∘ Übereinanderlegen von Gruppen (Cluster), um beispielsweise für eine Gruppe von Sensormesssignalen zu prüfen, welche gemeinsame Eigenschaften für eine zugehörige Bearbeitung aufweisen (Clusteranalyse auf dieser Teilmenge);
      ∘ und daraus Extraktion von Bearbeitungsparametern und Sensormesssignal-Kombinationen, welche in Zusammenhang gebracht werden können
   Hinzu kommt gegebenenfalls die Durchführung von Methoden der Datenkomprimierung, wie einer Hauptkomponentenanalyse, um eine Fokussierung auf relevante Datensätze zu erreichen.
2. Herstellen des funktionalen Zusammenhangs zwischen Bearbeitungsparametern und Sensormesssignalen
   - Klassifikation neuer Datensätze von Positionen zugeordneten Messsignalen in die ermittelten Gruppen; hierbei Überprüfung ob die Gruppen auch für neue Datensätze sinnvoll einsetzbar sind
   - Test verschiedener Möglichkeiten, um die Zuordnung von Sensormesssignalen-Bearbeitungsparameter-Paaren sinnvoll zu extrapolieren, z.B.:
      ∘ Regression
      ∘ Neuronale Netze
      ∘ Reinforcement Learning
      ∘ ...
   - Nutzen der Gruppen für die Extrapolation, d.h. trainieren einzelner Konfigurationen/Instanzen einer künstlichen Intelligenz (KI) für die unterschiedlichen Gruppen, dadurch Ausnutzung der geringeren Variabilität

Die Erfindung erlaubt das autonome Bearbeiten sensibler Werkstückoberflächen, zum Beispiel aus Holz, bei sehr kleinen Stückzahlen unter Wahrung eines gewünschten Gesamteindruckes des Bearbeitungsergebnisses. Der größte Vorteil ist die Automatisierbarkeit von bisher handwerklich gefertigten Unikaten, bei denen das zu erreichende Hauptziel eher ein gleichmäßiges "schönes" Gesamtbild als ein exaktes Maß ist. Hierfür kann der erfindungsgemäß eingesetzte intelligente Endeffektor an eine Vielzahl bestehender Roboter oder Maschinen angekoppelt werden, ohne diese kostspielig verändern oder aufwändig programmieren zu müssen. Des Weiteren wird keine zusätzliche externe Sensorik benötigt, um den Endeffektor zu nutzen.

Die Erfindung betrifft eine integrierte Lösung, die ohne großen Aufwand bei unterschiedlichen Szenarien eingesetzt werden kann. Hierfür kann primär davon ausgegangen werden, dass der mindestens eine Sensor, die Aktorik zur Durchführung der jeweiligen Bearbeitung inklusive dem jeweiligen Werkzeug und eine elektronische Auswerte- und Steuereinheit in einen bei der Erfindung eingesetzten Endeffektor integriert bzw. als Gesamtsystem ausgeführt sein kann, sodass lediglich die üblichen Anschlüsse (z.B. Leistung und Daten) benötigt werden. Es kann auf eine verbesserte Robotersteuerung und externe Sensorik verzichtet werden (z.B. durch die Integration spezifischer optischer Sensoren inklusive Auswertelogik in einen Roboter o.ä.).

Verwendungsmöglichkeiten gibt es bei allen aktuell oder zukünftig insbesondere robotergestützten Prozessen, bei denen eine Kombination aus Sensibilität und geringem Programmieraufwand unter Wahrung des Gesamteindruckes der bearbeiteten Oberfläche des Werkstückes gewünscht ist. Hierzu zählen handwerkliche Prozesse, wie insbesondere das Schleifen, Polieren oder Lackieren von Holz oder anderen sensiblen Materialien insbesondere bei geringen Stückzahlen. Grundsätzlich kann die hauptsächlich für Roboter entwickelte Lösung für sensible und intelligente Werkzeugspindeln auch in Werkzeugmaschinen eingesetzt oder auch fest im Raum positioniert werden, um eine zu bearbeitende Werkstückoberfläche vor der Werkzeugspindel beispielsweise mit einem Roboter zu bewegen.

## Patentansprüche

1. Verfahren zur automatisierten Bearbeitung von Werkstückoberflächen durch z.B. Polieren, Schleifen oder Lackieren, bei dem mindestens ein Werkzeug mit einem Endeffektor, das zur jeweiligen Oberflächenbearbeitung ausgebildet ist, relativ in Bezug zu einer jeweiligen zu bearbeitenden Oberfläche bewegt wird, dabei
werden vor, bei der Durchführung der Bearbeitung und nach einer Bearbeitung in einem Bearbeitungsbereich vor, neben und nach Durchführung der jeweiligen Bearbeitung in Vorschubbewegungsrichtung des Endeffektors mit mindestens einem Sensor, ortsaufgelöst Messsignale, die das momentan erreichte Bearbeitungsergebnis repräsentieren, erfasst und einer elektronischen Auswerte- und Steuereinheit, die am jeweiligen Endeffektor vorhanden ist, zugeführt, wobei mit der elektronischen Auswerte- und Steuereinheit ein Soll-Ist-Wertvergleich durchgeführt wird, ob ein vorgegebenes Arbeitsergebnis erreicht worden ist oder nicht, wobei
mit dem Ergebnis des Soll-Ist-Wertvergleichs die Bearbeitung der jeweiligen Oberfläche beendet oder Parameter mit denen das jeweilige Werkzeug betrieben wird, entsprechend angepasst werden und die jeweilige Oberflächenbearbeitung im jeweiligen Oberflächenbereich mit geänderten Parametern wiederholt oder bei einer weiteren Vorschubbewegung diese Parameter angepasst werden.

2. Verfahren nach Anspruch 1, **dadurch gekennzeichnet, dass** mit mindestens einem Sensor, orts- und zeitaufgelöst Messsignale, die das momentan erreichte Bearbeitungsergebnis repräsentieren, erfasst und der elektronischen Auswerte- und Steuereinheit, die am jeweiligen Endeffektor vorhanden ist, zugeführt werden.

3. Verfahren nach einem der vorhergehenden Ansprüche, **dadurch gekennzeichnet, dass** mindestens ein Sensor eingesetzt wird, der ausgewählt ist aus einem Kraft-, Drehmomentsensor, einem Sensor zur Bestimmung der momentanen Antriebsleistung eines Werkzeugs, ein Sensor zur Bestimmung der Drehgeschwindigkeit einer Werkzeugspindel, ein Oberflächenrauheitssensor, ein optischer Sensor, bevorzugt ein bildgebendes optisches Sensorsystem, Durchflussmengensensor, ein Temperatursensor, ein Abstandssensor und einem Glanzgradsensor.

4. Verfahren nach einem der vorhergehenden Ansprüche, **dadurch gekennzeichnet, dass** die mit dem/den jeweiligen Sensor(en) detektierten Messsignale orts- und/oder wellenlängenaufgelöst erfasst werden, wobei die erfassten Messsignale jeweiligen Positionskoordinaten zugeordnet und bei der Auswertung und Steuerung berücksichtigt werden.

5. Verfahren nach einem der vorhergehenden Ansprüche, **dadurch gekennzeichnet, dass** erfasste Messsignale, die vorgegebene Oberflächen- und Bearbeitungsarten repräsentieren in Gruppen zusammengefasst und einem elektronischen Speicher zugeführt werden, mit denen der Soll-Ist-Wertvergleich durchgeführt wird.

6. Verfahren nach einem der vorhergehenden Ansprüche, **dadurch gekennzeichnet, dass** der Soll-Ist-Wertvergleich mit Daten, die anhand von Bearbeitungsexperten ermittelt worden sind und die bevorzugt ebenfalls in Gruppen zusammengefasst werden, durchgeführt wird.

7. Verfahren nach einem der vorhergehenden Ansprüche, **dadurch gekennzeichnet, dass** mit dem mindestens einen Sensor erfasste Messsignale einem Einlernprozess zugeführt werden, mit denen eine Wissensbasis erstellt wird, die für nachfolgende Soll-Ist-Wertvergleiche und die Steuerung des jeweiligen Endeffektors genutzt wird.

8. Verfahren nach einem der vorhergehenden Ansprüche, **dadurch gekennzeichnet, dass** mindestens zwei unterschiedliche Sensoren gleichzeitig eingesetzt werden.

9. Verfahren nach einem der vorhergehenden Ansprüche, **dadurch gekennzeichnet, dass** der Endeffektor fest im Raum positioniert wird und ein Roboter ein jeweiliges Werkstück bewegt, wobei der Roboter auch jeweils die Positionskoordinaten der jeweils bearbeiteten Oberflächenposition an die elektronische Auswerte- und Steuereinheit übermittelt, oder aber zumindest eine Kommunikation zwischen Endeffektor und elektronischer Auswerte- und Steuereinheit erfolgt, die eine Entscheidung trifft, ob die Bearbeitung an einer bestimmten Position auf der Werkstückoberfläche abgeschlossen wird oder eine weitere Bearbeitung in dem entsprechenden Oberflächenbereich erforderlich ist.

10. Verfahren nach einem der vorhergehenden Ansprüche, **dadurch gekennzeichnet, dass** durch verschiedenartige Datenstrukturierung und Analysen hintergründige Zusammenhänge der Bearbeitungskonfigurationen und -ergebnisse erfasst und diese funktional umgesetzt werden, so dass für unbekannte Sensordatenkonstellationen Bearbeitungsparameter extrapoliert werden können.

## Claims

1. A method for the automated processing of workpiece surfaces by, for example, polishing, grinding or painting, in which at least one tool with an end effector, which is designed for the respective surface processing, is moved relative to a respective surface to be processed, wherein
before, during and after processing in a processing region before, next to and after carrying out the respective processing in the direction of feed movement of the end effector, spatially resolved measurement signals, which represent the processing result currently achieved, are recorded and fed to an electronic evaluation and control unit using at least one sensor, which electronic evaluation and control unit is present on the respective end effector, wherein the electronic evaluation and control unit carries out a target/actual value comparison to determine whether a predetermined work result has been achieved or not, wherein
the result of the target/actual value comparison causes the processing of the respective surface to terminate or parameters with which the respective tool is operated to be adjusted accordingly and the respective surface processing is repeated in the respective surface region with changed parameters or these parameters are adjusted during a further feed movement.

2. The method according to claim 1, **characterized in** measurement signals which represent the currently achieved processing result are recorded in a spatially and time-resolved manner using at least one sensor and are fed to the electronic evaluation and control unit which is present on the respective end effector.

3. The method according to one of the preceding claims, **characterized in that** at least one sensor is used which is selected from a force sensor, a torque sensor, a sensor for determining the instantaneous drive power of a tool, a sensor for determining the rotational speed of a tool spindle, a surface roughness sensor, an optical sensor, preferably an imaging optical sensor system, a flow rate sensor, a temperature sensor, a distance sensor and a gloss level sensor.

4. The method according to one of the preceding claims, **characterized in that** the measurement signals detected with the respective sensor(s) are recorded with spatial and/or wavelength resolution, the recorded measurement signals being assigned to respective position coordinates and taken into account in the evaluation and control.

5. The method according to one of the preceding claims, **characterized in that** detected measurement signals representing predetermined surface and processing types are combined in groups and fed to an electronic memory, with which the target/actual value comparison is carried out.

6. The method according to one of the preceding claims, **characterized in that** the target/actual value comparison is carried out with data which have been determined by means of processing experts and which are preferably also combined in groups.

7. The method according to one of the preceding claims, **characterized in that** measurement signals recorded with the at least one sensor are fed to a teach-in process, with which a knowledge base is created, which is used for subsequent target/actual value comparisons and the control of the respective end effector.

8. The method according to one of the preceding claims, **characterized in that** at least two different sensors are used simultaneously.

9. The method according to one of the preceding claims, **characterized in that** the end effector is fixedly positioned in space and a robot moves a respective workpiece, wherein the robot also transmits the respective position coordinates of the respective processed surface position to the electronic evaluation and control unit, or at least communication takes place between the end effector and the electronic evaluation and control unit takes place, which makes a decision as to whether processing is to be completed at a specific position on the workpiece surface or further processing is to take place in the respective surface region.

10. The method according to one of the preceding claims, **characterized in that** background correlations of the processing configurations and results are detected by various types of data structuring and analyses and these are functionally implemented so that processing parameters can be extrapolated for unknown sensor data constellations.

## Revendications

1. Procédé de traitement automatisé de surfaces de pièce, par exemple par polissage, meulage ou laquage, au cours duquel au moins un outil comprenant un effecteur terminal conçu pour traiter respectivement des surfaces est déplacé par rapport à une surface respective à traiter, lors duquel
avant, pendant la mise en œuvre du traitement et après un traitement dans une zone de traitement avant, pendant, et après la mise en œuvre du traitement respectif dans le sens d'avancée de l'effecteur terminal, des signaux de mesure résolus spatialement et représentant le résultat de traitement provisoirement obtenu sont préalablement enregistrés grâce à au moins un capteur et transmis à une unité électronique d'évaluation et de commande présente au niveau de l'effecteur terminal respectif, une comparaison valeur de consigne-valeur réelle étant effectuée par l'unité d'évaluation et de commande électronique afin de déterminer si un résultat de travail spécifié a été atteint ou non, où
selon le résultat de la comparaison valeur de consigne-valeur réelle, il est mis fin au traitement de la surface respective ou bien des paramètres avec lesquels l'outil respectif est utilisé sont ajustés en conséquence et le traitement de surface respectif dans la zone de surface respective est répété avec des paramètres modifiés ou bien lesdits paramètres sont ajustés lors d'un mouvement d'avancée supplémentaire.

2. Procédé selon la revendication 1, **caractérisé en ce qu'**au moins un capteur enregistre des signaux de mesure résolus spatialement et temporellement qui représentent le résultat de traitement provisoirement obtenu et les transmet à l'unité électronique d'évaluation et de commande présente au niveau de l'effecteur terminal respectif.

3. Procédé selon l'une quelconque des revendications précédentes, **caractérisé en ce qu'**on utilise au moins un capteur qui est choisi parmi un capteur de force, un capteur de couple, un capteur permettant de déterminer la puissance d'entraînement provisoire d'un outil, un capteur permettant de déterminer la vitesse de rotation d'une broche d'outil, un capteur de rugosité de surface, un capteur optique, de manière préférée un système de capteur optique d'imagerie, un capteur de débit, un capteur de température, un capteur de distance et un capteur de niveau de brillance.

4. Procédé selon l'une quelconque des revendications précédentes, **caractérisé en ce que** les signaux de mesure détectés par le(s) capteur(s) respectif(s) sont enregistrés avec une résolution spatiale et/ou de longueur d'onde, les signaux de mesure enregistrés étant associés à des coordonnées de position respectives et étant pris en compte dans l'évaluation et la commande.

5. Procédé selon l'une quelconque des revendications précédentes, **caractérisé en ce que** des signaux de mesure enregistrés qui représentent des types de surface et de traitement spécifiés sont combinés en groupes et transmis à une mémoire électronique avec laquelle la comparaison valeur de consigne-valeur réelle est effectuée.

6. Procédé selon l'une quelconque des revendications précédentes, **caractérisé en ce que** la comparaison valeur de consigne-valeur réelle est effectuée avec des données qui ont été déterminées par des experts en traitement et qui sont de manière préférée également combinées en groupes.

7. Procédé selon l'une quelconque des revendications précédentes, **caractérisé en ce que** des signaux de mesure enregistrés par le au moins un capteur sont transmis à une fonction d'apprentissage grâce à laquelle est créé une base de connaissances qui est utilisée pour des comparaisons valeur de consigne-valeur réelle supplémentaires et pour la commande de l'effecteur terminal respectif.

8. Procédé selon l'une quelconque des revendications précédentes, **caractérisé en ce qu'**au moins deux capteurs différents sont utilisés simultanément.

9. Procédé selon l'une quelconque des revendications précédentes, **caractérisé en ce que** l'effecteur terminal est positionné de manière fixe dans l'espace et un robot déplace une pièce d'œuvre respective, le robot transmettant également respectivement les coordonnées de position de la position de surface traitée respective à l'unité électronique d'évaluation et de commande, ou au moins une communication ayant lieu entre l'effecteur terminal et l'unité électronique d'évaluation et de commande, qui décide si le traitement est terminé au niveau d'une position définie sur la surface de pièce d'œuvre ou si un traitement supplémentaire est nécessaire dans la zone de surface correspondante.

10. Procédé selon l'une quelconque des revendications précédentes, **caractérisé en ce que** des relations sous-jacentes entre les configurations de traitement et les résultats de traitement sont détectées grâce à divers types de structuration de données et des analyse et lesdites relations sont transposées de manière fonctionnelle de sorte que des paramètres de traitement peuvent être extrapolés pour des constellations de données de capteurs inconnues.
